# EUROPÄISCHE PATENTSCHRIFT

(11) **EP 1 633 582 B1**
(45) Veröffentlichungstag und Bekanntmachung des Hinweises auf die Patenterteilung: **09.04.2008**
(21) Anmeldenummer: 04739490.3
(22) Anmeldetag: 01.06.2004
(51) Int. Cl.: B60H 1/00

(54) **KLIMAGERÄT EINER KLIMAANLAGE EINES KRAFTFAHRZEUGS**
AIR CONDITIONER OF AN AIR CONDITIONING SYSTEM OF A MOTOR VEHICLE
APPAREIL DE CLIMATISATION D'UNE INSTALLATION DE CLIMATISATION D'UN VEHICULE AUTOMOBILE

(30) Priorität: 04.06.2003 DE 10325499
(43) Veröffentlichungstag der Anmeldung: 15.03.2006
(73) Patentinhaber: Behr GmbH & Co. KG, 70469 Stuttgart (DE)
(72) Erfinder: BURR, Reinhold, 89522 Heidenheim (DE); HERRMANN, Michael, 70499 Stuttgart (DE); SCHAUDT, Jochen, 72379 Hechingen (DE); SPRANGER, Thomas, 70619 Stuttgart (DE)
(74) Vertreter: Grauel, Andreas
(86) Internationale Anmeldenummer: PCT/EP2004/005896
(87) Internationale Veröffentlichungsnummer: WO 2004/108448

(56) Entgegenhaltungen:
- DE-U- 29 704 427
- FR-A- 2 606 562
- PATENT ABSTRACTS OF JAPAN Bd. 0092, Nr. 49 (M-419), 5. Oktober 1985 (1985-10-05) & JP 60 099712 A (NIPPON DENSO KK), 3. Juni 1985 (1985-06-03)
- PATENT ABSTRACTS OF JAPAN Bd. 1997, Nr. 09, 30. September 1997 (1997-09-30) & JP 9 123744 A (HINO MOTORS LTD), 13. Mai 1997 (1997-05-13)

## Beschreibung

Die Erfindung betrifft ein Klimagerät einer Klimaanlage eines Kraftfahrzeugs mit einem einen abnehmbaren Gehäusedeckel aufweisenden Gehäuse, in dem folgende Komponenten angeordnet sind: Mindestens ein Gebläsemotor, mindestens ein Laufrad, mindestens ein Gebläsemotorhalter und mindestens ein Motorregler.

Klimageräte der genannten Art dienen dazu, in einer Fahrgastzelle oder in einem Laderaum eines Kraftfahrzeugs ein gewünschtes Klima zu schaffen, insbesondere in den Sommermonaten eine Kühlung vorzunehmen. Da bei einem Fahrzeug nur beschränkte Platzverhältnisse für die Aufnahme des Klimageräts zur Verfügung stehen, ist es oftmals notwendig, das Gerät an nur sehr schlecht von außen zugänglicher Stelle zu montieren. Daher sind seine Komponenten nur mit erhöhtem Aufwand oder gegebenenfalls unter sehr schlechten Bedingungen, beispielsweise ohne Sicht, erreichbar.

Die gattungsgemäße JP 60 099 712 offenbart ein derartiges Klimagerät, wobei manche Komponenten im Gehäuse deckel der Klimaanlage angeordnet sind.

Der Erfindung liegt daher die Aufgabe zugrunde, ein Klimagerät der eingangs genannten Art zu schaffen, das wartungsfreundlicher gestaltet ist. Ferner soll eine preiswerte und konstruktiv einfache Lösung geschaffen werden. Diese Aufgabe wird erfindungsgemäß dadurch gelöst, dass an dem Gehäusedeckel, insbesondere an seiner Innenseite, die Komponenten angeordnet sind. Diese Lösung gestattet es, nach Lösen des abnehmbaren Gehäusedeckels die sich am Gehäusedeckel befindlichen Komponenten insgesamt herauszunehmen, so dass im herausgenommenen Zustand eine sehr bequeme und einfache Zugriffsmöglichkeit auf diese Komponenten besteht. Auch schon bei der Montage des Klimagerätes ergeben sich Vorteile, da die genannten Komponenten am Gehäusedeckel befestigt werden, und dann die gesamte Baueinheit als Ganzes am Klimagerät befestigt werden kann. Mithin ist nicht nur eine große Wartungsfreundlichkeit realisiert, sondern es ergeben sich aufgrund der vorliegenden Konstruktion auch Montagekosteneinsparungen.

Nach einer Weiterbildung der Erfindung ist vorgesehen, dass der Gebläsemotorhalter eine Entkopplung umfasst. Die durch den Betrieb des Gebläsemotors auftretenden Schwingungen werden daher stark rduziert an den Gehäusedeckel weitergeleitet, so dass ein Eintrag von Schwingungen in das Gehäuse und dadurch Erschütterungen und/oder Geräuschbelästigungen vermieden werden. Dies ist insbesondere auch deshalb von Bedeutung, weil sich die genannten Komponenten an einem lösbaren Teil, nämlich an dem Gehäusedeckel, befinden.

Ferner ist von Vorteil, wenn ein Abschnitt eines dem Laufrad zugeordneten Spiralgehäuses sich am Gehäusedeckel befindet. Das Gebläse des Klimageräts weist das vom Gebläsemotor angetriebene Laufrad auf, dessen optimale Luftförderwirkung sich jedoch erst in Zusammenspiel mit einem Laufradgehäuse, insbesondere einem Spiralgehäuse, entwickelt. Eine konstruktive Verbesserung ergibt sich dadurch, dass am Gehäusedeckel ein Abschnitt des Spiralgehäuses angeordnet ist, der so ausgeführt ist, dass das im Spiralgehäuse umlaufende Laufrad problemlos bei der Entnahme des Gehäusedeckel aus dem Spiralgehäuse entnommen werden kann. Bei einer solchen Aufteilung des Spiralgehäuses in mehrere Teile kann vorgesehen werden, dass mindestens ein weiterer Abschnitt oder der gesamte Rest des Spiralgehäuses an dem sich am Gehäusedeckel befindlichen Abschnitt befestigbar ist, und somit das gesamte Spiralgehäuse bei einer Entnahme des Gehäusedeckels mit aus dem Gehäuse des Klimagerätes herausgenommen werden kann. Zum Ausbau des im Spiralgehäuse umlaufenden Laufrades muß dann im entnommenen Zustand des Gehäusedeckels nur die Verbindung zwischen den Spiralgehäuseteilen gelöst werden. Insbesondere kann derart vorgegangen werden, dass es sich bei dem dem Gehäusedeckel zugeordneten Abschnitt um eine Gehäusehälfte handelt. Das heißt, es verläuft eine Teilungsfuge des Spiralgehäuses im Bereich der Drehachse des Laufrads. Aus der vorstehend erläuterten Konstruktion resultiert ferner, dass Toleranzprobleme zwischen dem Spiralgehäuse und dem Laufrad vermieden werden, da die Laufradposition durch die Position des Gebläsemotors und des Gebläsemotorhalters definiert und sich aufgrund der Anordnung dieser Teile am Gehäusedeckel in entsprechender Weise einstellen wird. Da sich der Abschnitt des Spiralgehäuses ebenfalls am Gehäusedeckel befindet, weisen Laufrad und Abschnitt des Spiralgehäuses eine definierte Position zueinander auf, so dass unerwünschte Kontaktnahme, die zu einem Schleifen des Laufrads am Spiralgehäuse führen würde, verhindert ist.

Von Bedeutung ist ferner, dass der Abschnitt des Spiralgehäuses einstückig mit dem Gehäusedeckel ausgebildet sein kann. Bei einer derartigen Ausbildung entfallen Montagekosten des Spiralgehäuses. Ferner ist eine hohe maßliche Präzision der Teile und damit auch eine entsprechend genaue Positionierung gegeben.

Eine Weiterbildung der Erfindung sieht vor, dass der Gehäusedeckel eine Aufnahme für den Gebläsemotorhalter und/oder eine Aufnahme für den Motorregler aufweist. Auch diese Aufnahmen können bevorzugt in den Gehäusedeckel integriert sein. Aufgrund der insbesondere vorgeformten Aufnahmen ist eine sehr einfache und genaue Montage des Gebläsemotorhalters und/oder des Motorreglers möglich.

Schließlich ist von Vorteil, wenn am Gehäusedeckel weitere Komponenten des Klimageräts angeordnet sind, insbesondere mindestens ein Stellmotor und/oder mindestens eine Luftklappe und/oder mindestens ein Temperaturfühler und/oder mindestens ein Luftfilter und/oder mindestens ein elektrisches Kabel. Je mehr Komponenten am Gehäusedeckel, insbesondere an dessen Innenseite, angeordnet sind, um so wartungs- und/oder montagefreundlicher fällt das erfindungsgemäße Klimagerät aus.

Die Zeichnung veranschaulicht die Erfindung anhand eines Ausführungsbeispiels, und zwar zeigt:
- Figur 1: eine perspektivische Ansicht auf einen mit Komponenten versehenen Gehäusedeckel eines Gehäuses eines Klimageräts einer Klimaanlage eines Fahrzeugs in schematischer Darstellung und
- Figur 2: ein Schnitt durch das Gehäuse des Klimageräts in schematischer Darstellung.

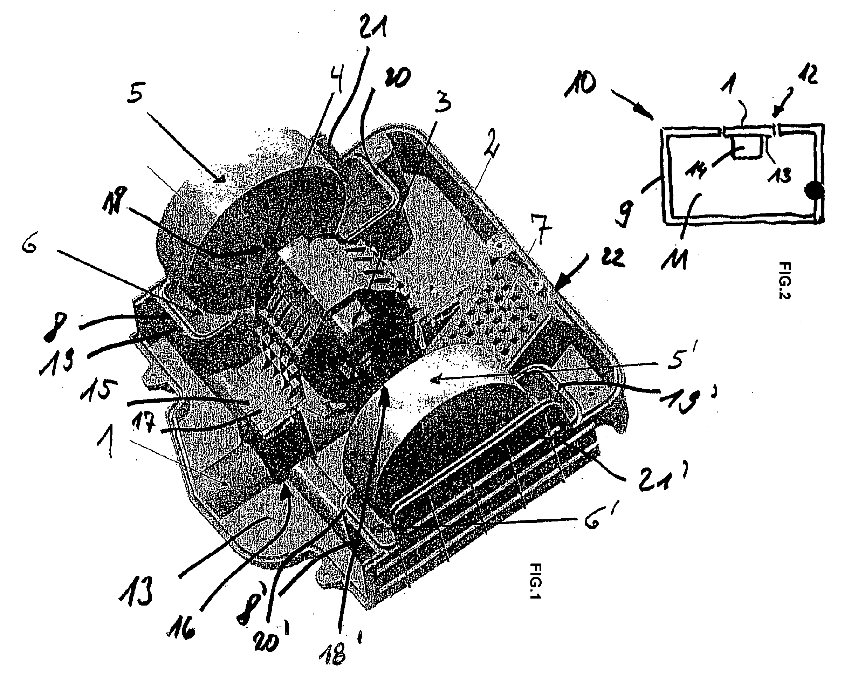

Die Figur 1 zeigt einen Gehäusedeckel 1, dem ein Gebläsemotorhalter 2 und ein Gebläsemotor 3 zugeordnet sind. Der Gebläsemotor 3 weist eine Motorachse 4 mit Laufrädern 5, 5' auf. Den Laufrädern 5 und 5' sind Spiralgehäuse 6, 6' zugeordnet, wobei aus der Figur 1 jedoch nur die Unterteile 8 und 8' der Spiralgehäuse 6, 6' dargestellt sind. Ferner ist dem Gehäusedeckel 1 ein Motorregler 7 zugeordnet.

Die Figur 2 verdeutlicht die Anordnung des Gehäusedeckels 1 an einem Gehäuse 9 eines nicht näher dargestellten Klimagerätes 10 einer Klimaanlage für ein Kraftfahrzeug. Im Innern 11 des Gehäuses 9 sind verschiedenste Aggregate des Klimageräts 10 angeordnet (nicht dargestellt). Das Gehäuse 10 weist eine Gehäuseöffnung 12 auf, die mittels des Gehäusedeckels 1 verschließbar ist. Der Gehäusedeckel 1 ist hierzu mittels geeigneter, lösbarer Befestigungsmittel im Bereich des Öffnungsrandes der Gehäuseöffnung 12 gehalten. An der Unterseite 13 des Gehäusedeckels 1 sind einige der erwähnten Aggregate des Klimageräts befestigt. Diese Aggregate sind in Figur 2 schematisch dargestellt und mit 14 bezeichnet.

Gemäß Figur 1 weist der Gehäusedeckel 1 an seiner Innenseite 13 etwa mittig den Gebläsemotorhalter 2 auf. Der Gebläsemotorhalter 2 ist als Halter mit einer Entkopplung 15 ausgebildet, das heißt, er besitzt einen vibrationsabsorbierenden Aufbau, um die Übertragung von Schwingungen des Gebläsemotors 3 auf den Gehäusedeckel 1 zu reduzieren. Für eine einfache Montage ist an der Innenseite 13 des Gehäusedeckels 1 eine Aufnahme 16 integral ausgebildet, an der der Gehäusemotorhalter 2 befestigbar ist. Bevorzugt wird die Aufnahme 16 im Zuge des Spritzgussverfahrens des aus Kunststoff bestehenden Gehäusedeckels 1 mit ausgebildet. Auf der Oberseite 17 des Gebläsemotorhalters 2 ist der Gebläsemotor 3 befestigt. Seine Motorachse 4 ist durchgehend gestaltet, das heißt, diese besitzt zwei Wellenstutzen 18, 18', an denen die Laufräder 5, 5' fest aufgepreßt sind. Die Laufräder 5 und 5' sind in der Figur 1 lediglich schematisch dargestellt, das heißt, die Gebläseschaufeln und dergleichen sind nicht erkennbar. Die Anordnung ist derart getroffen, dass von der Innenseite 13 in Bezug auf jedes der Laufräder 5, 5' ein Abschnitt 19 beziehungsweise 19' des Spiralgehäuses 6 beziehungsweise 6' ausgeht. Bevorzugt sind die Abschnitte 19 und 19' integral mit dem Gehäusedeckel 1 gefertigt. Bei den Abschnitten 19, 19' handelt es sich um Gehäusehälften des Spiralgehäuses 6, 6', das heißt ihr oberer Rand 20 beziehungsweise 20' liegt auf einer Höhe (Abstand von der Innenseite 13 des Gehäusedeckels 1), der der Höhenanordnung der Motorachse 4 entspricht. Demzufolge lässt sich jeweils die zweite, nicht dargestellte Hälfte jedes Spiralgehäuses 6, 6' von oben her über das jeweilige Laufrad 5, 5' stülpen und mit dem entsprechenden Abschnitt 19 beziehungsweise 19' mittels geeigneter Koppelelemente verbinden. Jedem Spiralgehäuse 6, 6' ist mindestens eine Lufteinlass- und eine Luftauslassöffnung zugeordnet (nicht dargestellt). Alternativ zur Befestigung der zweiten Hälften der Spiralgehäuse 6, 6' an den ersten Hälften (Abschnitte 19, 19') kann auch vorgesehen sein, dass die zweiten Hälften im Gehäuse 9 fest angeordnet sind und sich selbsttätig den ersten Hälften zuordnen, wenn der Gehäusedeckel 1 in die Gehäuseöffnung 12 eingesetzt wird. Wie die Figur 1 zeigt, ist die äußere Wand 21, 21' jedes Abschnitts 19, 19' im Bereich des zugehörigen Laufrads 5 beziehungsweise 5' nach oben verlängert gestaltet, wobei diese Wand 21, 21' gleichzeitig eine Endwand des Gehäusedeckels 1 bildet.

An der Innenseite 13 des Gehäusedeckels 1 ist im Bereich zwischen dem Gebläsemotor 3 und dem Laufrad 5' eine Aufnahme 22 für den Motorregler 7 ausgebildet. Diese Aufnahme 22 ist ebenfalls integral mit dem Gehäusedekkel 1 ausgestaltet und dient der Aufnahme des Motorreglers 7. Mithin ist der Motorregler 7 an dem Gehäusedeckel 1 abnehmbar befestigt.

Der Gebläsemotor 3 ist als Elektromotor ausgebildet; bei dem Motorregler 7 handelt es sich ebenfalls um ein elektrisches Bauteil. Diese beiden Bauteile sind über nicht dargestellte elektrische Kabel miteinander verbunden, wobei die Kabel bevorzugt ebenfalls mittels geeigneter Befestigungselemente (insbesondere Schellen) an der Innenseite 13 des Gehäusedeckels 1 befestigt sind.

Es ergibt sich folgende Funktion.

Soll beispielsweise bei einer Inspektion oder beim Auftritt einer Fehlermeldung der Gebläsemotor 3 des Klimageräts 10 näher untersucht werden, so ist es erforderlich, das Gehäuse 9 zu öffnen. Da erfindungsgemäß die erwähnten Aggregate des Klimageräts 10 an der Innenseite 13 des Gehäusedeckels 1 angeordnet sind, lässt sich auf einfache Weise durch Lösen einer entsprechenden Befestigungseinrichtung der Gehäusedeckel 1 zusammen mit den daran angeordneten Aggregaten entnehmen. Auf diese Art und Weise wird zum einen die Gehäuseöffnung 12 freigegeben, so dass Zugriff in das Innere 11 des Gehäuses 9 des Klimageräts 1 besteht und zum anderen besteht zu den sich am Gehäusedeckel 1 befindlichen Komponenten eine optimale Zugänglichkeit, da der Gehäusedeckel 1 einfach durch seine Entnahme aus dem Kraftfahrzeug gehandhabt werden kann. Die einfache Zugänglichkeit senkt die Montage/Reparaturkosten und gestattet auch ein sichereres Arbeiten. Wird beispielsweise bei einem Defekt der Gebläsemotor 3 ausgetauscht, so sind sämtliche Befestigungsstellen und abzuschraubenden Elemente frei zugänglich. Nach dem Motortausch wird der Gehäusedekkel zusammen mit den zugehörigen Aggregaten/Komponenten auf einfache Weise dem Klimagerät 10 wieder zugeordnet. Insbesondere wird derart vorgegangen, dass es sich bei den Aggregaten am Gehäusedeckel 1 um zusammenhängende Aggregate handelt. Hierunter sind die Aggregate zu verstehen, die in sich eine funktionelle Einheit im Sinne einer Baugruppe (beispielsweise Luftzuführung oder Kühleinheit oder dergleichen) bilden, so dass bei einer Entnahme stets sämtliche zu dieser Funktionseinheit gehörenden Komponenten zugänglich sind.

## Patentansprüche

1. Klimagerät einer Klimaanlage eines Fahrzeugs, mit einem einen abnehmbaren Gehäusedeckel aufweisenden Gehäuse, in dem folgende Komponenten angeordnet sind: mindestens ein Gebläsemotor, mindestens ein Laufrad, mindestens ein Gebläsemotorhalter und mindestens ein Motorregler, **dadurch gekennzeichnet, dass** an dem Gehäusedeckel (1), insbesondere an seiner Innenseite (13), die Komponenten angeordnet sind.

2. Klimagerät nach Anspruch 1, **dadurch gekennzeichnet, dass** der Gebläsemotorhalter (2) eine Schwingungsentkopplung (15) umfasst.

3. Klimagerät nach einem der vorhergehenden Ansprüche, **dadurch gekennzeichnet, dass** dem Laufrad (5,5') ein Spiralgehäuse (6,6') zugeordnet ist, von dem sich ein Abschnitt (19,19') am Gehäusedeckel (1) befindet.

4. Klimagerät nach einem der vorhergehenden Ansprüche, **dadurch gekennzeichnet, dass** der Abschnitt (19,19') des Spiralgehäuses (6,6')-einstückig mit dem Gehäusedeckel (1) ausgebildet ist.

5. Klimagerät nach einem der vorhergehenden Ansprüche, **dadurch gekennzeichnet, dass** der Gehäusedeckel (1) eine Aufnahme (16) für den Gebläsemotorhalter (2) und/oder eine Aufnahme (22) für den Motorregler (7) aufweist.

6. Klimagerät nach einem der vorhergehenden Ansprüche, **dadurch gekennzeichnet, dass** am Gehäusedeckel (1) weitere Komponenten des Klimageräts (10) angeordnet sind, insbesondere mindestens ein Stellmotor und/oder mindestens eine Luftklappe und/oder mindestens ein Temperaturfühler und/oder mindestens ein Luftfilter und/oder mindestens ein elektrisches Kabel.

7. Klimagerät nach einem der vorhergehenden Ansprüche, **dadurch gekennzeichnet, dass** am Gehäusedeckel (1) ein Gebläsemotor (3), zwei Laufräder (5, 5'), ein Gebläsemotorhalter (2) und ein Motorregler (7) angeordnet sind

## Claims

1. An air conditioner of an air conditioning system of a motor vehicle, comprising a housing, having a removable housing cover, in which the following components are arranged: at least one blower motor, at least one impeller, at least one blower motor mounting and at least one motor regulator, **characterized in that** the components are arranged on the housing cover (1), in particular on its inner side (13).

2. The air conditioner as claimed in claim 1, **characterized in that** the blower motor mounting (2) comprises a vibration isolator (15).

3. The air conditioner as claimed in one of the preceding claims, **characterized in that** the impeller (5, 5') is assigned a spiral housing (6, 6') of which a section (19, 19') is located on the housing cover (1).

4. The air conditioner according to one of the preceding claims, **characterized in that** the section (19, 19') of the spiral housing (6, 6') is designed in one piece with the housing cover (1).

5. The air conditioner according to one of the preceding claims, **characterized in that** the housing cover (1) has a receptacle (16) for the blower motor mounting (2) and/or a receptacle (22) for the motor regulator (7).

6. The air conditioner according to one of the preceding claims, **characterized in that** other components of the air conditioner (10) are arranged on the housing cover (1), in particular at least one positioning motor and/or at least one air flap and/or at least one temperature sensor and/or at least one air filter and/or at least one electric cable.

7. The air conditioner according to one of the preceding claims, **characterized in that** a blower motor (3), two impellers (5, 5'), a blower motor mounting (2) and a motor regulator (7) are arranged on the housing cover (1).

## Revendications

1. Appareil de climatisation d'un système de climatisation d'un véhicule, comprenant un carter présentant un couvercle de carter amovible, carter dans lequel sont disposés les composants suivants : au moins un moteur de ventilateur, au moins un rotor, au moins un support de moteur du ventilateur et au moins un régulateur du moteur,
**caractérisé en ce que** les composants sont disposés sur le couvercle (1) du carter, en particulier sur son côté intérieur (13).

2. Appareil de climatisation selon la revendication 1, **caractérisé en ce que** le support de moteur (2) du ventilateur comprend une neutralisation (15) des vibrations.

3. Appareil de climatisation selon l'une ou l'autre des revendications précédentes, **caractérisé en ce qu'**un carter en spirale (6, 6') est associé au rotor (5, 5'), carter en spirale dont une partie (19, 19') se trouve sur le couvercle de carter (1).

4. Appareil de climatisation selon l'une quelconque des revendications précédentes, **caractérisé en ce que** la partie (19, 19') du carter en spirale (6, 6') est configurée en formant une seule et même pièce avec le couvercle de carter (1).

5. Appareil de climatisation selon l'une quelconque des revendications précédentes, **caractérisé en ce que** le couvercle de carter (1) présente un logement (16) pour le support de moteur (2) du ventilateur et / ou un logement (22) pour le régulateur (7) du moteur.

6. Appareil de climatisation selon l'une quelconque des revendications précédentes, **caractérisé en ce que** d'autres composants de l'appareil de climatisation (10) sont disposés sur le couvercle de carter (1), en particulier au moins un servomoteur et / ou au moins un volet de ventilation et / ou au moins un capteur de température et / ou au moins un filtre à air et / ou au moins un câble électrique.

7. Appareil de climatisation selon l'une quelconque des revendications précédentes, **caractérisé en ce qu'**un moteur de ventilateur (3), deux rotors (5, 5'), un support de moteur (2) du ventilateur et un régulateur (7) du moteur sont disposés sur le couvercle de carter (1).
